# EUROPEAN PATENT SPECIFICATION

(11) **EP 2 620 924 B1**
(45) Date of publication and mention of the grant of the patent: **25.04.2018**
(21) Application number: 11826944.8
(22) Date of filing: 20.09.2011
(51) Int. Cl.: G08B 13/08, G08B 13/04, E06B 7/28, G08B 21/24

(54) **CRIME PREVENTION DEVICE, CRIME PREVENTION SYSTEM AND METHOD FOR DETERMINING STATE OF OPENING/CLOSING BODY**
VORRICHTUNG ZUR DIEBSTAHLVERHINDERUNG, VERFAHREN ZUR DIEBSTAHLVERHINDERUNG UND VERFAHREN ZUR BESTIMMUNG DES STATUS EINES ÖFFNUNGS-/SCHLIESSKÖRPERS
DISPOSITIF DE PRÉVENTION DU CRIME, SYSTÈME DE PRÉVENTION DU CRIME ET PROCÉDÉ DE DÉTERMINATION DE L'ÉTAT D'UN ÉLÉMENT D'OUVERTURE/FERMETURE

(30) Priority: 24.09.2010 JP 2010213203
(43) Date of publication of application: 31.07.2013
(73) Proprietor: NEC Corporation, Tokyo 108-8001 (JP)
(72) Inventor: SHINODA, Shigeki, Tokyo 108-8001 (JP); KASAI, Shigeru, Tokyo 108-8001 (JP); SASAKI, Yasuhiro, Tokyo 108-8001 (JP)
(74) Representative: Gill, David Alan
(86) International application number: PCT/JP2011/071934
(87) International publication number: WO 2012/039502

(56) References cited:
- DE-A1-102007 050 596
- JP-A- 2002 190 069
- JP-A- 2002 190 069
- JP-A- 2008 102 826
- JP-A- 2008 102 826
- JP-A- 2008 304 972
- JP-A- 2008 304 972
- US-A- 4 023 156
- US-A- 4 088 989
- US-A- 4 112 420

## Description

The present invention relates to crime prevention devices, crime prevention systems and methods for determining a state of an opening/closing body, and in particular, to a crime prevention device, a crime prevention system and a method for determining a state of an opening/closing body, which make use of a vibration.

In cases related to trespassing into residences, most of routes through which criminals intrude into residences are windows. Accordingly, in order to prevent criminals from trespassing, residents try to close and lock windows.

Crime prevention technologies are discussed in [PTL 1] Japanese Unexamined Patent Application Publication No. 2009-102904 (Paragraphs "0015" and "0016"); [PTL 2] Japanese Unexamined Patent Application Publication No. 2004-233300; and [PTL 3] Japanese Unexamined Patent Application Publication No. 2010-129008.

Patent literature (PTL) 1 discloses a crime prevention device using a vibration detection sensor. This crime prevention device detects a vibration arising at a door, and compares this vibration with vibration patterns which are registered in advance. The crime prevention device according to PTL 1 determines whether or not the vibration is caused by an unjust opening. Specifically, the vibration patterns include a vibration pattern arising at a door when the door has been actuated by a normal opening/closing operation, a vibration pattern arising at a door when a wind pressure is applied, further, a vibration pattern arising at a door when a vehicle has passed nearby, and the like.

As other related technologies, there are technologies disclosed in PTL 2 and PTL 3. In PTL 2, a technology is disclosed which detects break of glass depending on the frequency of its vibration. In PTL 3, a technology is disclosed which determines a state of a monitoring target by comparing a magnetic force level with a threshold value.

DE102007050596 discloses a sensor system for determining the locking state of a lock and which employs multiple actuators and acoustic sensors coupled together so as to enable propagation of a generated sound field to the outside of, for example, a door.

US4088989 discloses an intruder detector apparatus and including an active system employing a transmitter transducer and a receiver transducer secured to a panel to be monitored and to which a relatively low frequency signal is applied by the transmitter transducer and monitored for determining potential panel breakage.

The crime prevention device disclosed in PTL 1 is capable of, on the basis of a vibration having arisen at an opening/closing body, such as a door or a window which is installed at an opening section of a building, detecting an opening/closing operation of the opening/closing body, and the like. On the other hand, the crime prevention device disclosed in PTL 1 is not able to determine any state of the opening/closing body. That is, even though there is a problem related to crime prevention in that an opening/closing body is left in an opened state or in an unlocked state because of residents forgetting to close or lock the opening/closing body, it is difficult to determine these states by using this crime prevention device. In order to prevent intrusion by intruders, it is desirable to defect a state of the opening/closing body.

The object of the present invention is to provide a crime prevention device, a crime prevention system and a method for determining a state of an opening/closing body, which make it possible to solve the aforementioned problem.

According to one aspect of the present invention there is provided a crime prevention device, comprising:
an excitation means for applying vibration to an opening/closing body for opening/closing an opening section of a building;
a detection means for detecting the vibration of the opening/closing body to which the vibration has been applied by the excitation means;
a storage means for storing features of vibration corresponding to the state of the opening/closing body and to a change in state of the opening/closing body; and
a determination means for determining the state of the opening/closing body and a change in state of the opening/closing body on the basis of the feature of the detected vibration of the opening/closing body and the features of vibration.

The invention also provides for a crime prevention system according to an exemplary aspect of the present invention includes an opening/closing body for opening/closing an opening section of a building; a locking unit locking the opening/closing body; and a crime prevention device as defined herein and which is installed on the opening/closing body.

According to another aspect of the present invention there is provided a method for determining a state of an opening/closing body, comprising the steps of:
applying a vibration to the opening/closing body for opening/closing an opening section of a building;
detecting the vibration of the opening/closing body;
storing features of vibration corresponding to the state of the opening/closing body and to the change in state of the opening/closing body; and
determining the state of the opening/closing body and a change in state of the opening/closing body on the basis of the feature of the detected vibration of the opening/closing body and the features of vibration.

According to the crime prevention device, a crime prevention system and a method for determining the state of the opening/closing body by the present invention, it is possible to determine the state of the opening/closing body on the basis of the vibration arising in the opening/closing body.

### BRIEF DESCRIPTION OF DRAWINGS

Fig. 1 is a block diagram illustrating a crime prevention device according to a first exemplary embodiment of the present invention.
Fig. 2 is a flowchart illustrating a method for determining the state of an opening/closing body according to a first exemplary embodiment of the present invention.
Fig. 3 is a block diagram illustrating another example of a crime prevention device according to a first exemplary embodiment of the present invention.
Fig. 4A is a plan view under the state where an opening/closing body of a crime prevention system is closed and locked according to a second exemplary embodiment of the present invention.
Fig. 4B is a cross-sectional view taken along the line 4B-4B under the state where an opening/closing body of a crime prevention system is closed and locked according to a second exemplary embodiment of the present invention.
Fig. 4C is a cross-sectional view under the state where an opening/closing body of a crime prevention system is closed and unlocked according to a second exemplary embodiment of the present invention.
Fig. 4D is a cross-sectional view under the state where an opening/closing body of a crime prevention system is opened according to a second exemplary embodiment of the present invention.
Fig. 5 is a diagram illustrating a crime prevention system according to an example 1 of the present invention.
Fig. 6 is a block diagram illustrating a configuration of a crime prevention device according to an example 1 of the present invention.
Fig. 7 is a table illustrating the results from checking a period of time until a signal outputted from an electromechanical transducer element 321 becomes equal to one-tenth the magnitude of a continuously applied signal by using a crime prevention device according to an example 1 of the present invention.
Fig. 8 is a table illustrating the determined results and the percentage determined correctly in the case that the states of a window are determined ten times for each of states of a window by using a crime prevention system according to an example 1 of the present invention.
Fig. 9 is a table illustrating relations between positions where a crime prevention device according to an example 2 of the present invention is placed and periods of time until vibration signals of a window are decayed.
Fig. 10 is a table illustrating the determined results and the percentage determined correctly in a case of breaking a window glass and another case of performing the opening/closing operation of a window at a side where the crime prevention device is placed by using a crime prevention system according to an example 3 of the present invention.
Fig. 11 is a table illustrating the determined results and the percentage determined correctly in a case of breaking a window glass and another case of performing the opening/closing operation of a window at a side where the crime prevention device is not placed by using a crime prevention system according to an example 3 of the present invention.
Fig. 12 is a block diagram illustrating a configuration of a crime prevention device of an example 4 of the present invention.
Fig. 13 is a table illustrating the results of the false-detection rate (false-positive rate) in the case where the false detection is defined as judging a person to be an illegal intruder if a person has ever performed an operation of opening/closing a window in a non-alert operation mode and then similarly performs the operation of opening/closing the window in an alert operation mode, by using a crime prevention system according to an example 4 of the present invention.
Fig. 14 is a table illustrating the results of the false-detection rate (false-negative rate) in the case where the false detection is defined as judging a person not to be an illegal intruder if a person has never performed an operation of opening/closing a window in a non-alert operation mode and then similarly performs the operation of opening/closing the window in an alert operation mode, by using a crime prevention system according to an example 4 of the present invention.

### DESCRIPTION OF EMBODIMENTS

Next, the exemplary embodiments according to the present invention will be described in detail with reference to the drawings.

### [First Exemplary Embodiment]

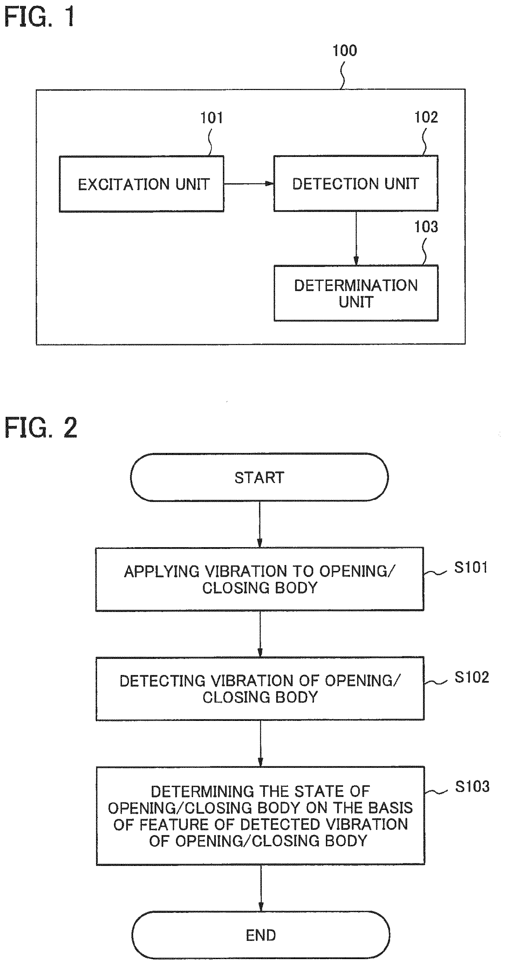

A crime prevention device 100 according to the first exemplary embodiment is illustrated in Fig. 1. The crime prevention device 100 includes an excitation unit 101, a detection unit 102 and a determination unit 103. The excitation unit 101 applies vibration to an opening/closing body for opening/closing an opening section of a building. The detection unit 102 detects the vibration of the opening/closing body which is vibrating. The determination unit 103 determines the state of the opening/closing body on the basis of the feature of the vibration of the opening/closing body having been detected by the detection unit 102.

The opening section of the building represents an opening which is provided at the place where a door or a window is installed. The opening/closing body represents a door, a window or the like which is installed at the opening. The state of the opening/closing body includes what they call opening/closing states of the opening/closing body, that is, a state in which the opening section is entirely covered by the opening/closing body, and a state in which only a portion of the opening section is covered by the opening/closing body or the opening section is not at all covered by the opening/closing body. The former one is also represented as a state in which the opening/closing body is closed. The latter one is also represented as a state in which the opening/closing body is opened. Besides, the states of the opening/closing body include a locked state in which the opening/closing body is closed and locked, and an unlocked state in which the opening/closing body is closed and unlocked.

Next, a method for determining a state of the opening/closing body according to the first exemplary embodiment of the present invention will be described by using Fig. 2. Here, the description will be made by using the crime prevention device 100, but a method for determining a state of the opening/closing body without using the crime prevention device 100 may be also performed.

First, the excitation unit 101 applies a vibration to an opening/closing body (S101). This makes the opening/closing body vibrate. Here, a feature of the vibration of the opening/closing body, which has begun to vibrate due to the excitation unit 101, differs depending on the state of the opening/closing body.

Next, the detection unit 102 detects the vibration of the opening/closing body which is vibrating (S102).

Next, the determination unit 103 determines state of the opening/closing body on the basis of the feature of the vibration of the opening/closing body detected by the detection unit 102. As described above, the condition of the vibration of the opening/closing body differs depending on the state of the opening/closing body. Accordingly, it becomes possible to determine whether the opening/closing body is in the opened state or in the closed state, and further, whether in the locked state or in the unlocked state, by checking the magnitude of the vibration, a period of time while the vibration continues, and the like.

The crime prevention device 100 applies a vibration to the opening/closing body and makes it to vibrate forcibly. The crime prevention device 100 detects the vibration of the opening/closing body to which the vibration is applied, and determines the state of the opening/closing body on the basis of the feature of the detected vibration. Thus, it is possible for the crime prevention device 100 to determine whether the opening/closing body is in the opened state or in the closed state, and further, whether in the locked state or in the unlocked state. Accordingly, employing the crime prevention device 100 enables detection of residents forgetting to close an opening/closing body and residents forgetting to lock it, thus making it possible to prevent intruders from intruding into a building.

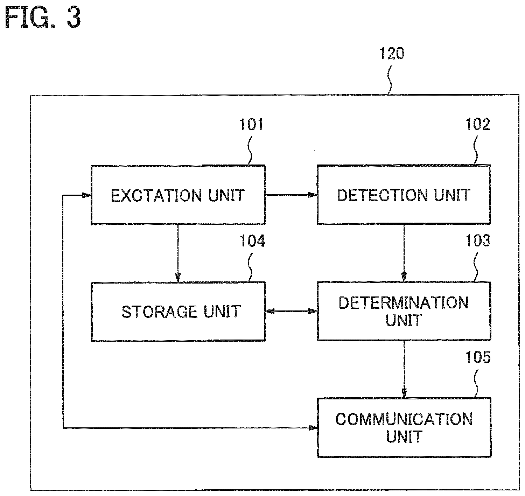

Further, the crime prevention device according to the first exemplary embodiment may include a storage unit 104 and a communication unit 105, as shown in a crime prevention device 120 shown in Fig. 3. The storage unit 104 stores the features of the vibration depending on the state of the opening/closing body, the conditions and threshold values for determining each state. Provided that the features of the vibration depending on the state of the opening/closing body are analyzed in advance, and further, conditions and threshold values for determining the each state are decided in advance, by comparing the feature of the detected vibration of the opening/closing body with the features, conditions and threshold values stored in the storage unit 104, the determination unit 103 can determine the state of the opening/closing body.

The determination unit 103 may determine not only the state of the opening/closing body but also the change of the state of the opening/closing body. The change of the state of the opening/closing body is based on the presence or absence of the opening/closing operation of the opening/closing body, the presence or absence of the opening/closing body, or the like for example. The storage unit 104 is made to store in advance the feature of the vibration depending on the change of each state of the opening/closing body, and the conditions and threshold values for determining the change of each state. Consequently, the determination unit 103 can determine the change of the state of the opening/closing body by comparing the information stored in the storage unit 104 with the feature of the detected vibration of the opening/closing body.

Moreover, the determination unit 103 may be configured to determine whether a person who has performed the opening/closing operation of the opening/closing body is a regular user such as a resident of a building or an intruder. The vibration which arises with the opening/closing operation of the opening/closing body varies in depending on the way of force applied to the opening/closing body and the speed of the opening/closing operation, and further, the feature of the vibration differs widely in individuals. Accordingly, it becomes possible to determine whether a person who has performed the opening/closing operation of the opening/closing body is a regular user or an intruder by learning in advance the vibrations arising with the opening/closing operation of the opening/closing body and analyzing the vibration having arisen in the opening/closing body on the basis of the result of the learning.

The communication unit 105 communicates with electronics devices. The crime prevention device 120 is able to transmit the results of determination by the determination unit 103 to other electronics devices by including the communication unit 105. Further, the crime prevention device 120 can check the state of the opening/closing body in response to a signal from an other electronic device. Accordingly, by using the crime prevention device 120, for example, it becomes possible for a user to check the state of a door or a window of his residence from outside the home.

It is desirable that the excitation unit 101 and the detection unit 102 are composed of an electromechanical transducer element. This is because the electromechanical transducer element can be used as a vibration actuator and a vibration sensor, and includes these two functions in one element.

### [Second Exemplary Embodiment]

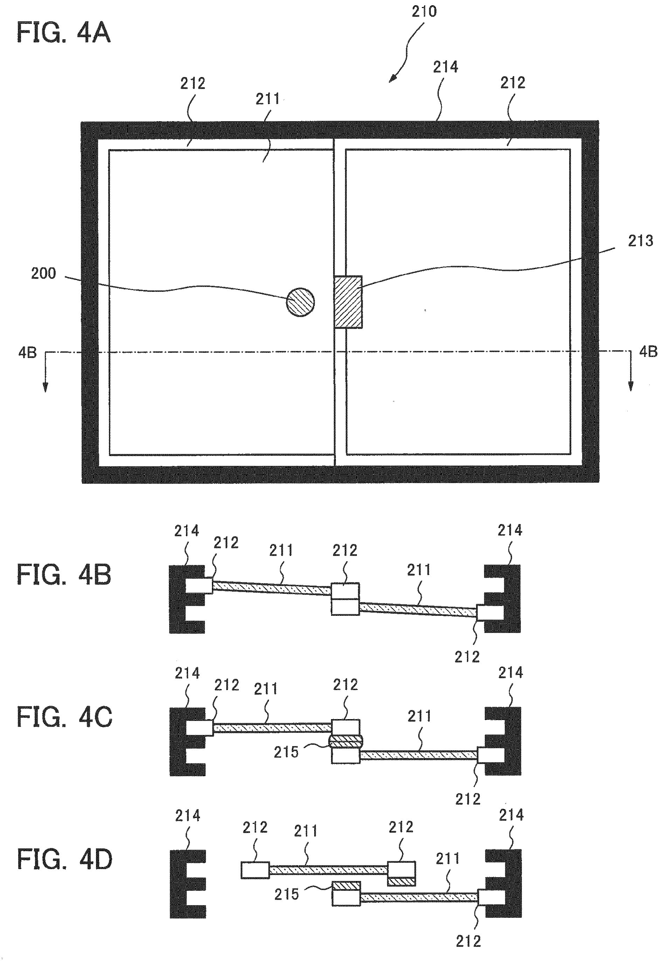

Next, a crime prevention system 210 according to the second exemplary embodiment will be described by using Figs. 4A, 4B and 4C. As shown in Fig. 4A, the crime prevention system according to this exemplary embodiment includes an opening/closing body for opening/closing an opening section of a building, a crime prevention device 200 and a locking unit 213 for locking the opening section. The crime prevention device 200 includes an excitation unit, a detection unit and a determination unit, whose configuration is the same as that of the first exemplary embodiment. As the crime prevention device 200, both the crime prevention device 100 shown in Fig. 1 and the crime prevention device 120 shown in Fig. 3 can be utilized. The following description will be made on the supposition that the crime prevention device 200 has the same configuration as that of the crime prevention device 100 shown in Fig. 1. That is, the crime prevention device 200 includes the excitation unit 101, the detection unit 102 and the determination unit 103. The opening/closing body includes two sliding-type windows. Each of the windows includes a window glass 211 and a glass frame 212. The opening section of the building is provided with a frame, and a window frame 214 is provided as the frame. The locking unit 213 is installed in the windows. For example, a crescent key may be used as the locking unit 213.

The crime prevention system 210 in Fig. 4A illustrates a system in which the opening/closing body is in the closed and locked state. Fig. 4B illustrates a cross-sectional view taken along the line 4B-4B in Fig. 4A. Fig. 4C illustrates a cross-sectional view in the case where the opening/closing body is in the closed and unlocked state. Fig. 4D illustrates a cross-sectional view in the case where the opening/closing body is in the opened state.

As shown in Fig. 4B, in the case where the opening/closing body is in the closed and locked state, the two window glasses 211 are banded together and unified through the locking unit 213. Meanwhile, in the case where the opening/closing body is in the closed and unlocked state, the banding of the two window glasses 211 by the locking unit 213 nearly dissolves. As a result, as shown in Fig. 4C, there exist the two window glasses 211 interposing a packing material 215. Even in the case where the opening/closing body is in the closed and locked state, this packing material 215 is also interposed between the two window glasses 211, but the packing material 215 is crushed by the banding of the window glasses 211 caused by the locking unit 213, and thus, the packing material 215 is not illustrated in Fig. 4B.

In the case where the opening/closing body is in the opened state, the banding of the window glasses 211 by the locking unit 213 dissolves, and further, as shown in Fig. 4D, a space arises between the two window glasses 211.

As described above, the opening/closing body of the crime prevention system 210 takes the state where the opening/closing body is closed and locked, the state where the opening/closing body is closed and unlocked, and the state where the opening/closing body is opened. The state of the window glasses 211 under each state is different from one another. For this reason, if the excitation unit 101 of the crime prevention device 200 applies a vibration to the window glasses 211, the condition of the vibration of the window glasses 211 varies depending on the state of the opening/closing body. Accordingly, the detection unit 102 of the crime prevention device 200 detects the vibration of the window glasses 211, and on the basis of the feature of the vibration, the determination unit 103 can determine the state of the window glasses 211. Therefore, employing the crime prevention device 200 enables detection of residents forgetting to close the window glasses 211 and residents forgetting to lock them, thus making it possible to prevent intruders from intruding into a building.

It is desirable to locate the crime prevention device 200 near the locking unit 213. The condition of the vibration of the opening/closing body changes depending the presence or absence of the banding of the window glasses 211 by the locking unit 213, and thus, if the crime prevention device 200 is located at such a position, the detection unit 102 in the crime prevention device 200 is able to detect the vibration of the opening/closing body at a high sensitivity.

In this exemplary embodiment, the crime prevention system 210 including two sheets of the window glasses 211 as the opening/closing body has been described, but both single and more than one opening/closing body may be available. In the case of a single opening/closing body the locking unit may band the opening/closing body with the frame of the opening section of the building.

In the case of more than one opening/closing body the crime prevention device may be installed at any one of the opening/closing bodies. For example, in the case of the crime prevention system 210, the crime prevention device 200 may be installed at any one of the window glasses 211. This is because the vibration arising in one of the window glasses 211 is transmitted to the other one of the window glasses 211 through the glass frame 212 and the window frame 214.

As described above, the excitation unit 101, the detection unit 102 and the determination unit 103 are installed inside the crime prevention device 200. By installing these units inside the single crime prevention device 200 as described above, it is possible to simplify the installation of the crime prevention device 200. Each of the excitation unit, the detection unit and the determination unit may exist as an independent device.

The crime prevention system 210 can detect the presence or absence of the break of the window glass 211. This will be described below. The crime prevention system 210 stores in advance the feature of the vibration caused by the break of the window glass 211. The crime prevention system 210 detects the vibration which has arisen in the window glass 211, and compares the feature of the detected vibration with the feature of the vibration caused by the break of the window glass 211. If these features are the same with each other, the crime prevention system 210 determines that the window glass 213 has been broken. If these features are different from each other, the crime prevention system 210 determines that the window glass 213 is not broken.

The method for feeding electric power to the crime prevention device 200 is not limited to a particular one. For example, a battery may be installed inside the crime prevention device 200. A wire is connected to the crime prevention device 200, and electric power may be fed through the wire.

### [Example 1]

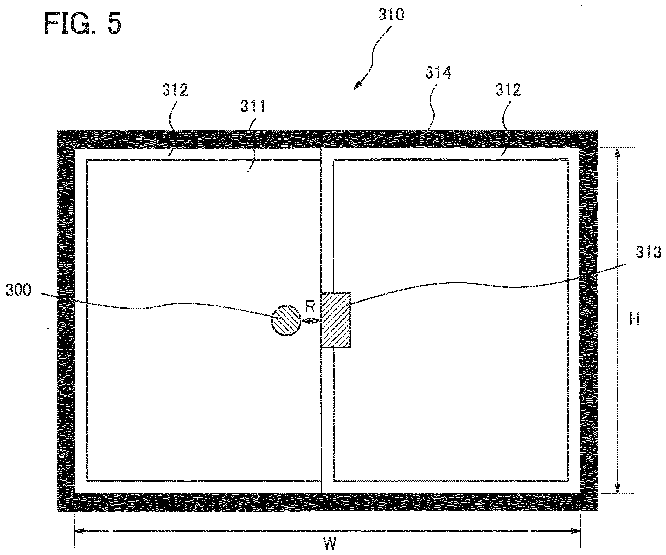

Next, a crime prevention system 310 according to this example will be described. As shown in Fig. 5, the crime prevention system 310 includes a crime prevention device 300, an opening/closing body for opening/closing an opening section of a building, and a locking unit 313 for locking the opening section. The opening/closing body includes two sliding-type windows. Each of the windows includes a window glass 311 and a glass frame 312. The opening section of the building is provided with a frame, and a window frame 314 is provided as the frame. The locking unit 313 is installed at the windows.

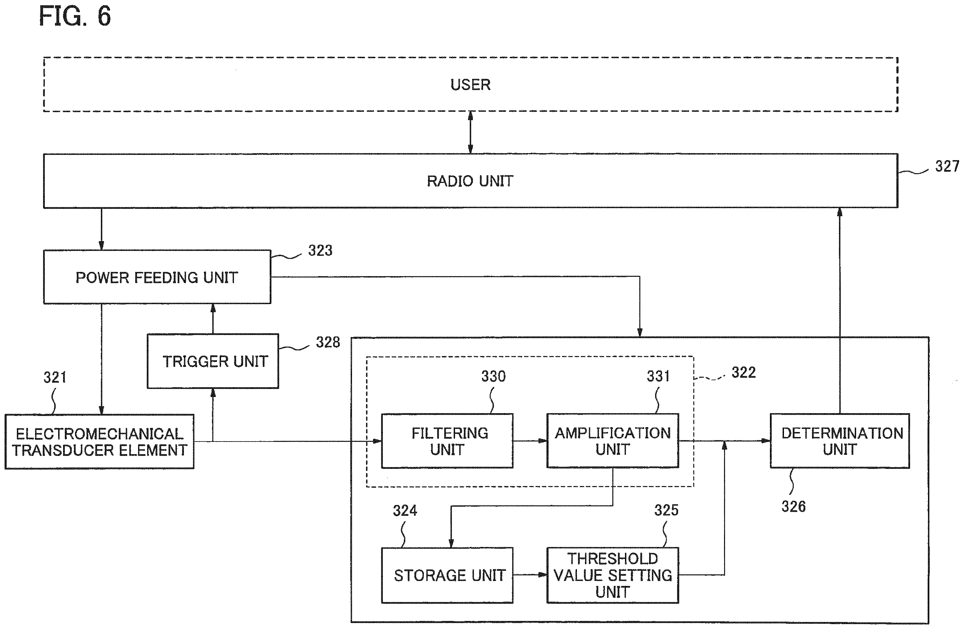

The configuration of the crime prevention device 300 is illustrated in Fig. 6. The crime prevention device 300 includes an electromechanical transducer element 321, a signal processing unit 322, a storage unit 324, a threshold value setting unit 324, a determination unit 326, a power feeding unit 323, a trigger unit 328 and a radio unit 327. The electromechanical transducer element 321 includes an excitation unit for applying a vibration to the window glasses 311 and a detection unit for detecting a vibration of the window, and outputs a first signal depending on the detected vibration. The signal processing unit 322 includes a filtering unit 330 which inputs the first signal and eliminates undesired signals from the first signal, and an amplification unit 331 which amplifies the first signal. The signal processing unit 322 outputs the first signal through the filtering unit 330 and the amplification unit 331 as a second signal. The storage unit 324 stores vibration signals depending on the state of the window. The threshold value setting unit 325 determines threshold values for determining the state of the window on the basis of the vibration signals stored in the storage unit 324. The determination unit 326 compares the second signal with the determined threshold values, and determines the states of the window. The power feeding unit 323 feeds electric power to the electromechanical transducer element 321, the signal processing unit 322, the storage unit 324, the threshold value setting unit 324 and the determination unit 326. The radio unit 327 transmits determination results to external devices and terminals, and receives signals from a user. The trigger unit 328 begins to feed electric power to the signal processing unit 322, when it receives a predetermined signal from a user., or the value of the electric signal outputted from the electromechanical transducer element 321 exceeds a constant value. All components shown in Fig. 6 are housed in one case.

As shown in Fig. 5, it is supposed that the external dimensions of the window are 120 cm in width (W) and 100 cm in height (H). Moreover, it is supposed that each window can independently move along rails of the window frame 314 into which the glass frame 312 is set. A general crescent key is used as the locking unit 313. The distance R between the crime prevention device 300 and the locking unit 313 is 3 cm.

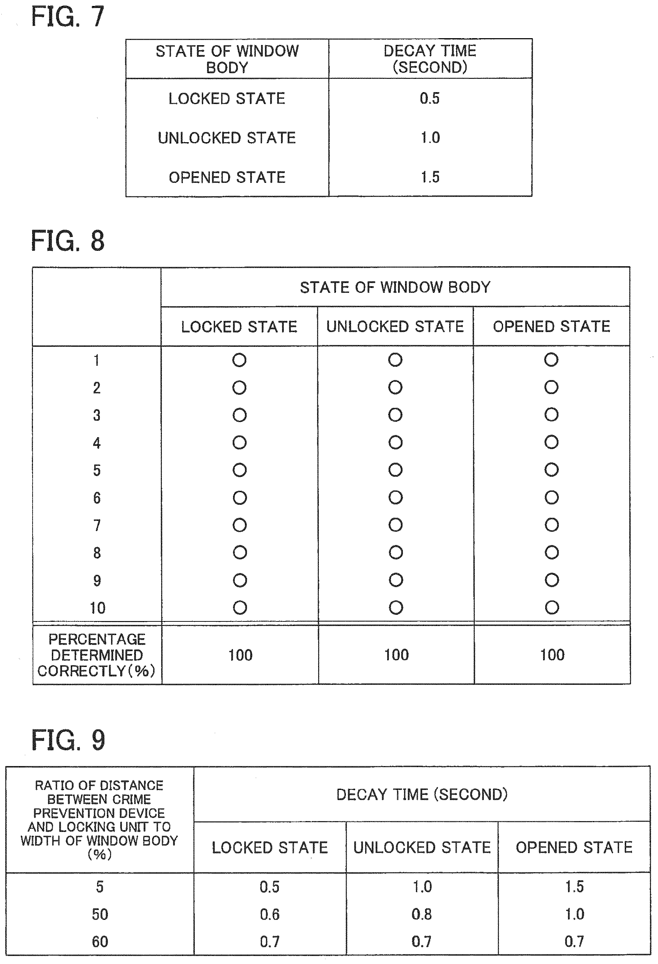

First, under each state, that is, a state in which the window is closed and locked, a state in which the window is unlocked; and a state in which the window is opened, a signal of 1 Vrms and 1 kHz was applied for 1 second to the electromechanical transducer element 321 from the power feeding unit 323. Afterwards, a period of time until the signal outputted from the electromechanical transducer element 321 became equal to one-tenth the magnitude of the signal being continuously applied was checked. The results are shown in Fig. 7. As shown in Fig. 7, the periods of time until the signals were decayed differed depending on the state of the window. According to Fig. 7, the decay time was 0.5 seconds in the state where the window was locked. Similarly, the decay time was 1.0 seconds in the state where the window was unlocked. And, the decay time was 1.5 seconds in the state where the window was opened.

Next, the storage unit 324 was made to store, as initial values, periods of time, shown in Fig. 7, until the signals were decayed in each state of the window. The threshold value setting unit 325 was set so that a range up to 5% above or below the initial value stored in the storage unit 324 would be made the threshold value range of each state of the window.

Next, the crime prevention system 310 was made to determine the state of the window ten times for each state of the window. The determined results and the percentage determined correctly are illustrated in Fig. 8. As shown in Fig. 8, the percentage determined correctly indicated 100 percent for all states.

The effectiveness of this crime prevention system 310 was able to be confirmed from the aforementioned results.

### [Example 2]

Next, the relation between a position where the crime prevention device 300 was placed and a period of time until the vibration signal decayed was verified. As shown in Fig. 9, if the ratio of the distance between the crime prevention device 300 and the locking unit 313 to the width (W) of the window exceeded 50 percent, the decay time of the vibration signals became constant independently of the state of the window. Accordingly, in the case of the crime prevention system 310, it is desirable to locate the crime prevention device 300 so that the ratio of the distance between the crime prevention device 300 and the locking unit 313 to the width of the window becomes less than or equal to 50 percent.

### [Example 3]

Next, it was verified whether or not it was possible to determine the presence or absence of break of the window glass 311 and the presence or absence of the operation of opening/closing the window by using the crime prevention system 310. Before the verification, the feature of a vibration caused by break of the window glass 311 was analyzed, and the feature was stored into the storage unit 324, and the threshold values of the threshold value setting unit 325 was set.

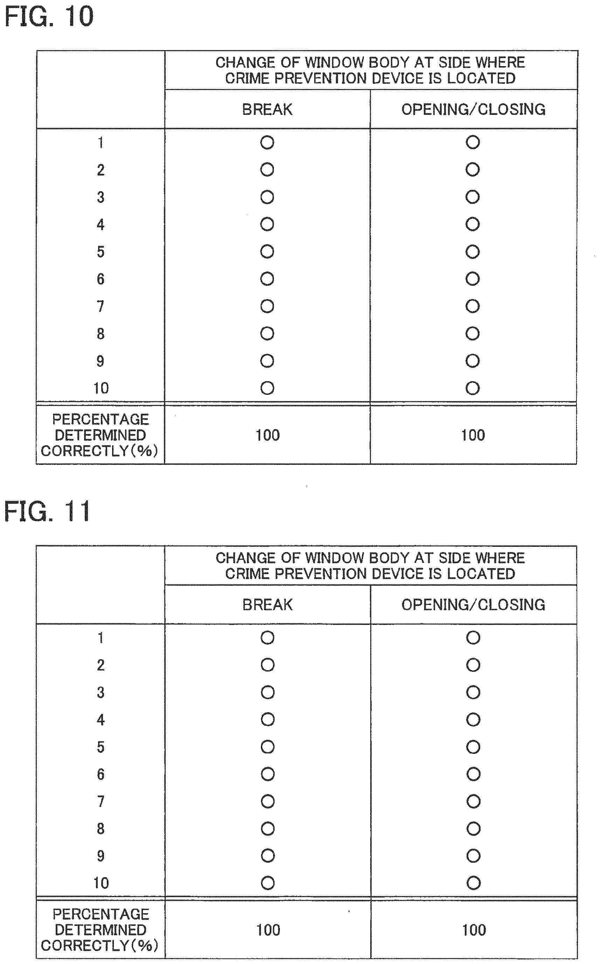

In Fig. 10, the determined results and the percentage determined correctly are illustrated when the window glass 311 at the side where the crime prevention device 310 was placed was broken and the opening/closing operation of the window at the side where the crime prevention device 310 was placed was performed. In Fig. 11, the determined results and the percentage determined correctly are illustrated when the window glass 311 at the side where the crime prevention device 310 was not placed was broken and the opening/closing operation of the window at the side where the crime prevention device 310 was not placed was performed. The number of measurements was ten times for each state. As shown in Figs. 10 and 11, the percentage determined correctly indicated 100 percent in all states.

### [Example 4]

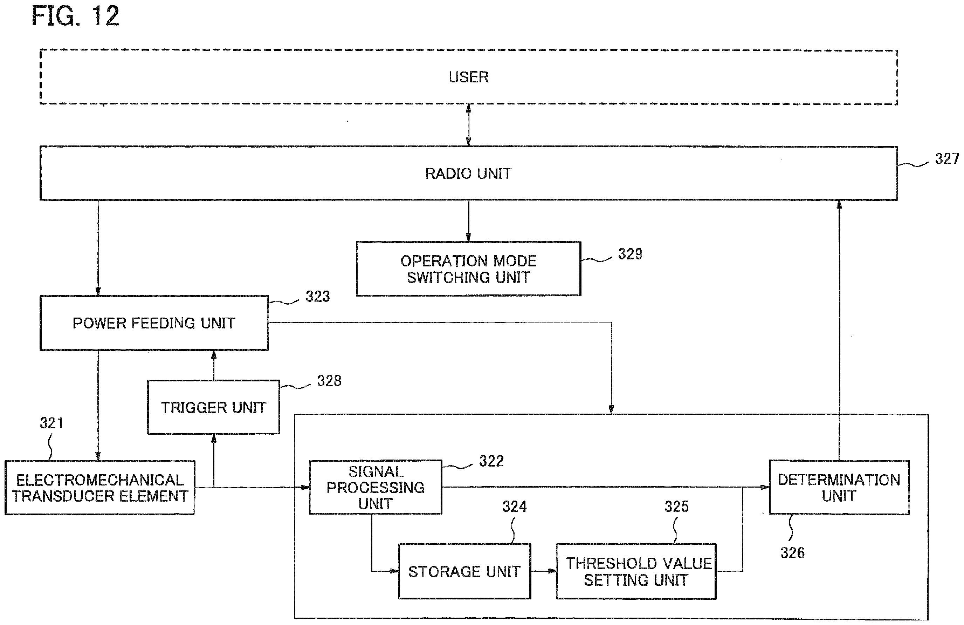

Next, as shown in Fig. 12, a crime prevention system will be described, which includes an operation mode switching unit 329 switching two operation modes of an alert operation mode and a non-alert operation mode on the basis of the setting by a user. The other configurations of the crime prevention system are the same as those of example 1, and thus, description thereof is omitted.

In the non-alert operation mode, a signal of a vibration caused by the opening/closing operation of a window is learnt, and the results are stored into the storage unit 324. Consequently, in the non-alert operation mode, it is possible to store signals of vibrations caused by the opening/closing operation of the window in user's daily life.

In the alert operation mode, it is possible to determine whether the opening/closing operation is performed by a user or an illegal intruder by comparing the signal of the vibration caused by the opening/closing operation of the window with the signals stored in the storage unit 324.

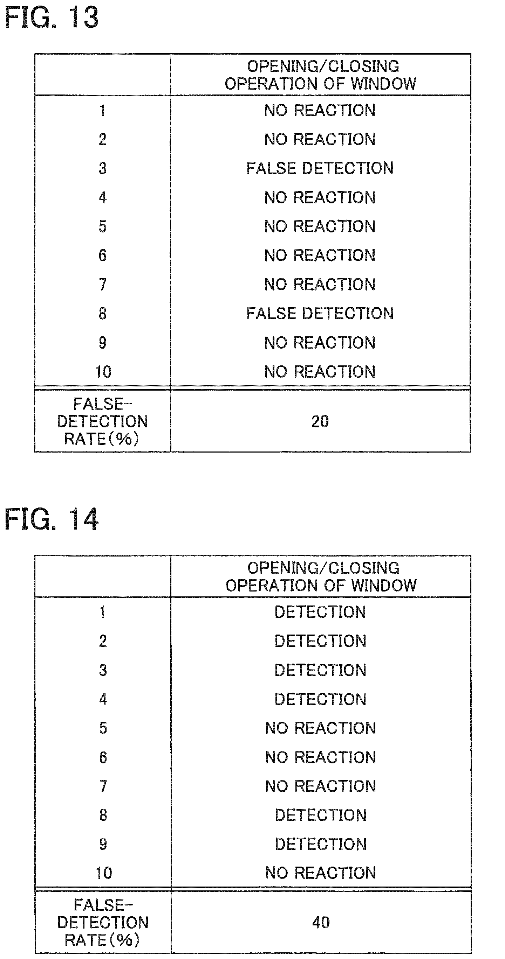

The results of the false-detection rate (false-positive rate) is illustrated in Fig. 13, in the case where the false detection is defined as judging a person to be an illegal intruder if a person has ever performed an operation of opening/closing a window in a non-alert operation mode and then similarly performs the operation of opening/closing the window in an alert operation mode, by using a crime prevention system according to an example 4 of the present invention.

The results of the false-detection rate (false-negative rate) is illustrated in Fig. 14, in the case where the false detection is defined as judging a person not to be an illegal intruder if a person has never performed an operation of opening/closing a window in a non-alert operation mode and then similarly performs the operation of opening/closing the window in an alert operation mode, by using a crime prevention system according to an example 4 of the present invention. The former false-detection rate was 20 percent, and the latter false-detection rate was 40 percent. Although false-detection rates of both results were not zero percent, the opening/closing operations performed by a user, and an illegal intruders were able to be determined with an acceptable success rate.

Since false-detection accuracy improves in proportion to a degree of learning, after a certain amount of learning, it is possible to determine with high accuracy whether a person performing an opening/closing operation of the window is a user or an illegal intruder.

Hereinbefore, the present invention has been described with reference to the exemplary embodiments and the examples, but the present invention is not limited to the aforementioned exemplary embodiments and examples. Various changes which can be understood by those skilled in art can be made in the configurations and the details of the present invention within the scope of the present invention as defined by the claims.

### REFERENCE SIGNS LIST

- 100, 120: Crime prevention device
- 101: Excitation unit
- 102: Detection unit
- 103: Determination unit
- 104: Storage unit
- 105: Communication unit
- 210, 310: Crime prevention system
- 211, 311: Window glass
- 212, 312: Glass frame
- 213, 313: Locking unit
- 214, 314: Window frame
- 215: Packing material
- 321: Electromechanical transducer element
- 322: Signal processing unit
- 323: Power feeding unit
- 324: Storage unit
- 325: Threshold value setting unit
- 326: Determination unit
- 327: Radio unit
- 328: Trigger unit
- 329: Operation mode switching unit
- 330: Filtering unit
- 331: Amplification unit

## Claims

1. A crime prevention device (100 120), comprising:
an excitation means (101) for applying vibration to an opening/closing body for opening/closing an opening section of a building;
a detection means (102) for detecting the vibration of the opening/closing body to which the vibration has been applied by the excitation means (101); a storage means (104) storing features of vibration corresponding to the state of the opening/closing body and to a change in state of the opening/closing body; and
a determination means (103) for determining the state of the opening/closing body and a change in state of the opening/closing body on the basis of the feature of the detected vibration of the opening/closing body and the features of vibration.

2. The crime prevention device according to Claim 1, wherein the state of the opening/closing body is any one of a first state in which the opening/closing body is closed and locked, a second state in which the opening/closing body is closed and unlocked, and a third state in which the opening/closing body is opened.

3. The crime prevention device according to Claim 1 or Claim 2, wherein the feature of the vibration is at least one of a period of time and magnitude of the vibration.

4. The crime prevention device according to any one of Claims 1 to 3, further comprising:
an electromechanical transducer element;
wherein the excitation means (101) and the detection means (102) are included in the electromechanical transducer element.

5. The crime prevention device according to any one of Claims 1 to 4, further comprising:
a power feeding means for feeding electric power to the excitation means (101), the detection means (102) and the determination means (103).

6. The crime prevention device according to any one of Claims 1 to 5, further comprising:
a radio means for transmitting the result of determination performed by the determination means (103).

7. The crime prevention device according to any one of Claims 1 to 6, further comprising:
a signal processing means (322);
wherein the signal processing means (322) comprises
a filtering means (330) for eliminating undesired signals from a signal depending on the detected vibration of the opening/closing body, and
an amplification means (331) for amplifying the signal.

8. A crime prevention system comprising:
an opening/closing body opening/closing an opening section of a building;
a locking unit locking the opening/closing body; and
the crime prevention device according to any one of Claims 1 to 8, which is installed on the opening/closing body.

9. A method for determining a state of an opening/closing body, comprising the steps of:
applying a vibration to the opening/closing body for opening/closing an opening section of a building;
detecting the vibration of the opening/closing body; storing features of vibration corresponding to the state of the opening/closing body and to the change in state of the opening/closing body; and
determining the state of the opening/closing body and a change in state of the opening/closing body on the basis of the feature of the detected vibration of the opening/closing body and the features of vibration.

## Patentansprüche

1. Verbrechensbekämpfungsvorrichtung (100, 120), die Folgendes umfasst:
ein Erregungsmittel (101) zum Anlegen einer Schwingung an einen Öffnungs-/Schließkörper zum Öffnen/Schließen eines Öffnungsabschnitts eines Gebäudes;
ein Erfassungsmittel (102) zum Erfassen der Schwingung des Öffnungs-/Schließkörpers, auf den die Schwingung durch das Erregungsmittel (101) angewendet wurde;
ein Speichermittel (104), das Schwingungsmerkmale, die dem Zustand des Öffnungs-/Schließkörpers und einer Zustandsänderung des Öffnungs-/Schließkörpers entsprechen, speichert; und
ein Bestimmungsmittel (103) zum Bestimmen des Zustands des Öffnungs-/Schließkörpers und einer Zustandsänderung des Öffnungs-/Schließkörpers basierend auf dem Merkmal der erfassten Schwingung des Öffnungs-/Schließkörpers und der Schwingungsmerkmale.

2. Verbrechensbekämpfungsvorrichtung nach Anspruch 1, wobei der Zustand des Öffnungs-/Schließkörpers einer der Folgenden ist: ein erster Zustand, in dem der Öffnungs-/Schließkörper geschlossen und verriegelt ist, ein zweiter Zustand, in dem der Öffnungs-/Schließkörper geschlossen und entriegelt ist, und ein dritter Zustand, in dem der Öffnungs-/Schließkörper geöffnet ist.

3. Verbrechensbekämpfungsvorrichtung nach Anspruch 1 oder Anspruch 2, wobei das Schwingungsmerkmal eine Zeitdauer und/oder eine Schwingungsgröße ist.

4. Verbrechensbekämpfungsvorrichtung nach einem der Ansprüche 1 bis 3, die ferner Folgendes umfasst:
ein elektromechanisches Wandlerelement;
wobei das Erregungsmittel (101) und das Erfassungsmittel (102) in dem elektromechanischen Wandlerelement enthalten sind.

5. Verbrechensbekämpfungsvorrichtung nach einem der Ansprüche 1 bis 4, die ferner Folgendes umfasst:
ein Stromzuführmittel zum Zuführen elektrischer Energie zu dem Erregungsmittel (101), dem Erfassungsmittel (102) und dem Bestimmungsmittel (103).

6. Verbrechensbekämpfungsvorrichtung nach einem der Ansprüche 1 bis 5, die ferner Folgendes umfasst:
ein Funkmittel zum Übertragen des Ergebnisses der Bestimmung, die von dem Bestimmungsmittel (103) durchgeführt wurde.

7. Verbrechensbekämpfungsvorrichtung nach einem der Ansprüche 1 bis 6, die ferner Folgendes umfasst:
ein Signalverarbeitungsmittel (322);
wobei das Signalverarbeitungsmittel (322) Folgendes umfasst:
ein Filtermittel (330) zum Eliminieren unerwünschter Signale von einem Signal abhängig von der erfassten Schwingung des Öffnungs-/Schließkörpers und
ein Verstärkungsmittel (331) zum Verstärken des Signals.

8. Verbrechensbekämpfungssystem, das Folgendes umfasst:
einen Öffnungs-/Schließkörper, der einen Öffnungsabschnitt eines Gebäudes öffnet/schließt;
eine Verriegelungseinheit, die den Öffnungs-/Schließkörper verriegelt; und
die Verbrechensbekämpfungsvorrichtung nach einem der Ansprüche 1 bis 8, die an dem Öffnungs-/Schließkörper installiert ist.

9. Verfahren zur Bestimmung eines Zustandes eines Öffnungs-/Schließkörpers, das Folgende Schritte umfasst:
Anlegen einer Schwingung an den Öffnungs-/Schließkörper zum Öffnen/Schließen eines Öffnungsabschnitts eines Gebäudes;
Erfassen der Schwingung des Öffnungs-/Schließkörpers;
Speichern von Schwingungsmerkmalen, die dem Zustand des Öffnungs-/Schließkörpers und der Zustandsänderung des Öffnungs-/Schließkörpers entsprechen; und
Bestimmen des Zustands des Öffnungs-/Schließkörpers und einer Zustandsänderung des Öffnungs-/Schließkörpers basierend auf dem Merkmal der erfassten Schwingung des Öffnungs-/Schließkörpers und der Schwingungsmerkmale.

## Revendications

1. Dispositif de prévention du crime (100, 120) comprenant :
un moyen d'excitation (101) pour faire vibrer à un élément d'ouverture/fermeture afin d'ouvrir/fermer une section d'ouverture d'un bâtiment ;
un moyen de détection (102) pour détecter la vibration de l'élément d'ouverture/fermeture que le moyen d'excitation (101) a fait vibré ;
un moyen de mémorisation (104) mémorisant des caractéristiques de vibration correspondant à l'état de l'élément d'ouverture/fermeture et à un changement d'état de l'élément d'ouverture/fermeture ; et
un moyen de détermination (103) pour déterminer l'état de l'élément d'ouverture/fermeture et un changement d'état de l'élément d'ouverture/fermeture en fonction de la caractéristique de la vibration détectée de l'élément d'ouverture/fermeture et des caractéristiques de vibration.

2. Dispositif de prévention du crime selon la revendication 1, dans lequel l'état de l'élément d'ouverture/fermeture est n'importe lequel d'un premier état dans lequel l'élément d'ouverture/fermeture est fermé et verrouillé, d'un deuxième état dans lequel l'élément d'ouverture/fermeture est fermé et déverrouillé, et d'un troisième état dans lequel l'élément d'ouverture/fermeture est ouvert.

3. Dispositif de prévention du crime selon la revendication 1 ou la revendication 2, dans lequel la caractéristique de la vibration est au moins l'une d'une période de temps et d'une grandeur de la vibration.

4. Dispositif de prévention du crime selon l'une quelconque des revendications 1 à 3, comprenant en outre :
un élément transducteur électromécanique ;
dans lequel le moyen d'excitation (101) et le moyen de détection (102) sont inclus dans l'élément transducteur électromécanique.

5. Dispositif de prévention du crime selon l'une quelconque des revendications 1 à 4, comprenant en outre :
un moyen d'alimentation électrique pour alimenter en courant électrique le moyen d'excitation (101), le moyen de détection (102) et le moyen de détermination (103).

6. Dispositif de prévention du crime selon l'une quelconque des revendications 1 à 5, comprenant en outre :
un moyen radio pour transmettre le résultat de la détermination effectuée par le moyen de détermination (103).

7. Dispositif de prévention du crime selon l'une quelconque des revendications 1 à 6, comprenant en outre :
un moyen de traitement de signaux (322) ;
dans lequel le moyen de traitement de signaux (322) comprend
un moyen de filtrage (330) pour éliminer des signaux parasites d'un signal en fonction de la vibration détectée de l'élément d'ouverture/fermeture, et
un moyen d'amplification (331) pour amplifier le signal.

8. Système de prévention du crime comprenant :
un élément d'ouverture/fermeture qui ouvre/ferme une section d'ouverture d'un bâtiment ;
une unité de verrouillage qui verrouille l'élément d'ouverture/fermeture ; et
le dispositif de prévention du crime selon l'une quelconque des revendications 1 à 8, lequel est installé sur l'élément d'ouverture/fermeture.

9. Procédé de détermination d'un état d'un élément d'ouverture/fermeture, comprenant les étapes consistant à :
faire vibrer l'élément d'ouverture/fermeture afin d'ouvrir/fermer une section d'ouverture d'un bâtiment ;
détecter la vibration de l'élément d'ouverture/fermeture ;
mémoriser des caractéristiques de vibration correspondant à l'état de l'élément d'ouverture/fermeture et à un changement d'état de l'élément d'ouverture/fermeture ; et
déterminer l'état de l'élément d'ouverture/fermeture et un changement d'état de l'élément d'ouverture/fermeture en fonction de la caractéristique de la vibration détectée de l'élément d'ouverture/fermeture et des caractéristiques de vibration.
